# EUROPÄISCHE PATENTSCHRIFT

(11) **EP 2 032 400 B1**
(45) Veröffentlichungstag und Bekanntmachung des Hinweises auf die Patenterteilung: **30.06.2010**
(21) Anmeldenummer: 07725862.2
(22) Anmeldetag: 06.06.2007
(51) Int. Cl.: B60S 1/04, B60S 1/16

(54) **ELEKTROMOTORISCHER WISCHERANTRIEB**
ELECTROMOTORIC WIPER DRIVE
COMMANDE D'ESSUIE-GLACE PAR MOTEUR ELECTRIQUE

(30) Priorität: 28.06.2006 DE 102006029859
(43) Veröffentlichungstag der Anmeldung: 11.03.2009
(73) Patentinhaber: Valeo Systemes D'Essuyage, 78321 La Verrière (FR)
(72) Erfinder: HARTMANN, Werner, 71665 Vaihingen/Enz (DE); EGNER-WALTER, Bruno, 74076 Heilbronn (DE); KAPITZA, Harald, 71640 Ludwigsburg (DE)
(74) Vertreter: Rosolen-Delarue, Katell
(86) Internationale Anmeldenummer: PCT/EP2007/005000
(87) Internationale Veröffentlichungsnummer: WO 2008/000338

(56) Entgegenhaltungen:
- DE-A1-102005 008 632
- DE-C1- 4 037 707
- FR-A1- 2 863 990

## Beschreibung

Die Erfindung bezieht sich auf einen elektromotorischen Wischerantrieb für Wischanlagen für Fahrzeugscheiben, insbesondere für Fahrzeugfrontscheiben, gemäß Oberbegriff Patentanspruch 1.

Die bei Straßenfahrzeugen in der Regel über die Außenkontur der Fahrzeugkarosserie vorstehenden Wischwellen und die an diesen vorgesehenen Elemente einer Wischanlage, wie Wischarme oder Lagerteile solcher Wischarme usw., stellen bei Unfällen, insbesondere auch bei solchen mit Fußgängern und/oder Zweiradfahrer eine erhebliche Gefahrenquelle für Verletzungen dar.

Um das Verletzungsrisiko zu minimieren ist bekannt, Wischanlagen für Fahrzeuge grundsätzlich so auszubilden, dass bei einer einen bestimmten Schwellwert oder eine bestimmte Auslösekraft übersteigenden Krafteinwirkung, insbesondere auch in einer Achsrichtung parallel oder annähernd parallel zu der Wischwellenachse, die Wischwelle axial in den Innenraum der Fahrzeugkarosserie ausweicht. Diese Ausweichbewegung ist z.B. dadurch realisiert, dass eine das Lager für die Wischwelle aufweisende Motor- oder Wischerplatine an der Fahrzeugkarosserie mit Befestigungseinrichtungen gehalten ist, die bei einer die Auslösekraft übersteigenden Krafteinwirkung die Verbindung zwischen der Wischerplatine und der Fahrzeugkarosserie lösen (DE 198 33 488 A1).

Bekannt sind auch Ausführungen, bei denen die Wischwelle für ein axiales Verschieben in ihrem Wischwellenlager ausgebildet ist, im Normalzustand, d.h. für den normalen Wischbetrieb aber durch ein Axial-Sicherungselement gegen axiales Verschieben gesichert ist. Dieses Axial-Sicherungselement ist beispielsweise ein in einer Ringnut der Wischwelle aufgenommener Federring, der sich im Normalzustand der Wischanlage gegen eine Fläche des Wischwellenlagers abstützt und dadurch die Wischwelle gegen axiales Verschieben sichert (DE 198 51 881 A1). Die Ringnut ist an ihrer dem Wischwellenlager entfernten Seite leicht angeschrägt, sodass bei einer eine Auslösekraft übersteigenden Krafteinwirkung auf die Wischwelle bzw. auf das mit dieser verbundene Ende des Wischarmes der Federring durch die angeschrägte Seite der Ringnut so aufgeweitet wird, dass die Wischwelle axial durch den weiterhin gegen das Wischwellenlager anliegenden Federring hindurch gleiten und so innerhalb des Wischwellenlagers axial ausweichen kann.

Bekannt ist weiterhin eine Wischanlage für Fahrzeuge (WO 2004/050440), bei der als Axial-Sicherungselement für die Wischwelle eine Druckfeder vorgesehen ist, die eine aus einem Wischwellenlagergehäuse vorstehende und für die Befestigung eines Wischarmes dienende Teillänge der Wischwelle umschließt und sich einerseits an einem Wischwellenlagergehäuse und andererseits an einem an dieser Teillänge befestigten Kurbelarm abstützt. Im Falle eines Unfalls, d.h. beim Einwirken einer axialen Kraft auf die Wischwelle kann diese durch Spannen der Druckfeder axial ausweichen. Eine tatsächliche Freigabe der Wischwelle für eine axiale Ausweichbewegung bei einer eine Auslösekraft überschreitenden Krafteinwirkung auf die Wischwelle erfolgt bei dieser bekannten Wischanlage aber nicht. Außerdem sind der Hub bzw. die Größe der axialen Ausweichbewegung durch die verwendete Druckfeder stark eingeschränkt.

Bei den vorgenannten bekannten Lösungen handelt es sich um Wischanlagen für Fahrzeugscheiben, bei denen die jeweilige Wischwelle antriebsmäßig über ein Hebelgetriebe mit dem elektromotorischen Wischerantrieb verbunden ist, d.h. die Wischwelle nicht unmittelbar Bestandteil des elektromotorischen Antriebes ist. Bei Wischanlagen für Fahrzeuge und dabei insbesondere für Straßenfahrzeuge werden aber im zunehmenden Maße auch elektromotorische Wischantriebe verwendet, deren Ausgangswelle die Wischwelle zur Befestigung des jeweiligen Wischarmes bildet. Die Wischwelle steht dabei mit einer Wischwellenteillänge über eine Seite (Vorderseite) eines Gehäuses des Wischerantriebs vor und bildet an dieser Teillänge ein Wischwellenende, welches für die Befestigung des jeweiligen Wischarmes ausgebildet ist. Mit einer weiteren Wischwellenteillänge ist die Wischwelle in dem nach außen hin dicht verschlossenen Gehäuse aufgenommnen und in diesem dreh- oder schwenkbar gelagert. Das Gehäuse ist dabei in der Regel das Getriebegehäuse des Wischerantriebs. In diesem Getriebegehäuse ist auf der Wischwelle auch ein Getrieberad vorgesehen, über welches die Wischwelle für die Dreh- bzw. Schwenkbewegung reversierend angetrieben wird. Bekannt ist auch, bei diesen Wischerantrieben eine axiale Ausweichbewegung für die Wischwelle vorzusehen (FR-A-2 863 990), und zwar dadurch, dass in dem dicht geschlossenen Gehäuse des Wischerantriebs ein zusätzlicher Freiraum für das axiale Ausweichen der Wischwelle geschaffen ist, die Wischwelle also auch nach dem Auslösen der Schutzfunktion im Gehäuse verbleibt, allerdings u.a. mit dem Nachteil eines zusätzlichen Bauvolumens für den Wischerantrieb bzw. das entsprechende Gehäuse und einer starken Begrenzung der axialen Ausweichbewegung.

Aufgabe der Erfindung ist es, einen elektromotorischen Wischerantrieb mit einem einfachen und kompakten Aufbau aufzuzeigen, bei dem die Wischwelle im normalen Betriebszustand mit einer Teillänge in dem nach außen hin dicht verschlossenen Gehäuse aufgenommen und gelagert ist, und zwar u.a. mit der Möglichkeit eines axiales Ausweichens der Wischwelle bei einer eine Auslösekraft übersteigenden Krafteinwirkung für einen zuverlässigen Personenschutz im Falle eines Unfalls.

Zur Lösung dieser Aufgabe ist ein elektromotorischer Wischerantrieb entsprechend dem Patentanspruch 1 ausgebildet.

Wenn auf das aus dem Gehäuse vorstehende Wischwellenende eine Krafteinwirkung erfolgt, deren axiale Komponente eine Auslösekraft übersteigt, erfolgt ein axiales Verschieben dieses Wischwellenendes in Richtung Gehäuse in der Form, dass die Wischwelle durch das Gehäuse und durch das im Gehäuse angeordnete Getrieberad hindurch verschoben wird, so dass das im normalen Betrieb im geschlossenen Gehäuse aufgenommene andere Wischwellenende durch die Freigabe- oder Ausweichöffnung auf der anderen Gehäuseseite austritt. Hierdurch ist bei kompakter Ausbildung insbesondere auch des Gehäuses eine axiale Ausweichbewegung über eine große axiale Länge möglich, d.h. im Extremfall über die gesamte Länge, mit der die Wischwelle im normalen Betrieb über das Gehäuse vorsteht. Ein Freiraum im Inneren des Gehäuses für die axiale Verschiebung der Wischwelle ist nicht erforderlich.

Gemäß der Erfindung ist ein die Wischwelle umschließendes hülsenartiges Verbindungselement zur antriebsmäßigen Verbindung zwischen der Wischwelle und dem Getrieberad vorgesehen, wobei das Verbindungselement zumindest auf einer Teillänge von dem Getrieberad formschlüssig umschlossen ist und an dieser Teillänge an seiner Außenfläche kegelstumpfförmig gebildet ist, und zwar mit einem sich in Richtung zum ersten Wischwellenende hin verringernden Durchmesser.

Bei der axialen Ausweichbewegung wird die Freigabe- oder Ausweichöffnung durch die Wischwelle geöffnet, beispielsweise durch Herausbewegung oder Ausstoßen eines diese Öffnung im normalen Betrieb dicht verschließenden Verschließelementes.

Eine Weiterbildung der Erfindung sieht vor, dass das Gehäuse an der der ersten Gehäuseseite gegenüberliegenden zweiten Gehäuseseite eine Öffnung aufweist, die durch ein bei der axialen Ausweichbewegung der Wischwelle von dieser entfernbares und/oder herausdrückbares Verschließelement verschlossen ist, wobei außerdem das Verschließelement durch Klemmsitz in der Öffnung gehalten ist.

Eine andere Weiterbildung der Erfindung sieht vor, dass das Verschließelement ein pfropfenartiges Element, vorzugsweise aus einem gummielastischen Werkstoff, z.B. aus Gummi oder einem gummielastischen Kunststoff ist.

Eine andere Weiterbildung der Erfindung sieht vor, dass das Verschließelement mit wenigstens einem ringförmigen Vorsprung in der Öffnung gehalten ist.

Eine andere Weiterbildung der Erfindung sieht vor, dass das Verschließelement aus einem Flachmaterial, beispielsweise aus einem metallischen Flachmaterial oder aus einem Kunststoff-Flachmaterial besteht.

Eine andere Weiterbildung der Erfindung sieht vor, dass das Verschließelement scheiben- oder tellerartig ausgebildet ist, und zwar vorzugsweise derart, dass es an seiner den Innenraum des Gehäuses (4) zugewandten Seite konkav gewölbt ist.

Eine andere Weiterbildung der Erfindung sieht vor, dass die das Verschließelement aufnehmende Öffnung von einem Lagerabschnitt gebildet ist, in welchem das zweite Wischwellenende gelagert ist.

Eine andere Weiterbildung der Erfindung sieht vor, dass in der Öffnung des Lagerabschnitts eine Lagerbuchse zur Lagerung der Wischwelle vorgesehen ist.

Eine andere Weiterbildung der Erfindung sieht vor, dass das Verschließelement zugleich als axiales Abstützelement für die Wischwelle ausgebildet ist.

Eine andere Weiterbildung der Erfindung sieht vor, dass die Auslösekraft zumindest teilweise durch die Befestigung des Verschließelementes am Gehäuse, z.B. in der Öffnung des Gehäuses eingestellt ist.

Eine andere Weiterbildung der Erfindung sieht vor, dass die Wischwelle zumindest an ihrer im Gehäuse aufgenommenen Wischwellenteillänge einen konstanten oder im Wesentlichen konstanten Durchmesser aufweist.

Noch andere Weiterbildungen der Erfindung sind Gegenstand der Unteransprüche. Die Erfindung wird im Folgenden anhand der Figuren an verschiedenen Ausführungsbeispielen näher erläutert. Es zeigen:
- Fig. 1: in vereinfachter Darstellung einen Schnitt durch das Getriebe eines elektromotorischen Wischerantriebs (Scheibenwischermotor) im Bereich der die Ausgangswelle dieses Antriebs bildenden Wischwelle;
- Fig. 2: in vergrößerter Teildarstellung einen Schnitt im Bereich einer zur Gehäuseinnenseite sowie zur Gehäuseaußenseite hin offenen Lageröffnung eines Lagerelementes am Getriebegehäuse der Figur 1, zusammen mit einem Verschließelement;
- Fig. 3: das Verschließelement der Figur 2 in perspektivischer Einzeldarstellung;
- Fig. 4: eine Darstellung ähnlich Figur 1, jedoch nach dem Auslösen des Personenschutzes bzw. der Schutzfunktion, d.h. nach dem axialen Ausweichen der Wischwelle;
- Fig. 5: in einer Darstellung ähnlich Figur 2 das Getriebegehäuse eines elektromotorischen Wischerantriebs einer weiteren Ausführungsform der Erfindung;
- Fig. 6: in perspektivischer Darstellung das mit dem Lagerelement für ein rückwärtiges Wischwellenlager versehene Gehäuseteil (Gehäusedeckel) des Getriebegehäuses;
- Fig. 7: eine Darstellung ähnlich Figur 1 bei einer weiteren Ausführungsform der Erfindung;
- Fig. 8: in Einzeldarstellung einen Schnitt durch das rückwärtige Gehäuseteil (Gehäusedeckel) des Getriebegehäuses des elektromotorischen Wischerantriebs der Figur 7, zusammen mit dem Verschließelement;
- Fig. 9: und 10 in Darstellung ähnlich Figur 7 das Getriebe des elektromotorischen Wischerantriebs in verschiedenen Zuständen nach dem Auslösen des Personenschutzes bzw. beim axialen Ausweichen der Wischwelle;
- Fig. 11: verschiedene perspektivische Darstellungen zur Erläuterung der Verbindung der Wischwelle mit dem Getrieberad;
- Fig. 12: eine Darstellung ähnlich Figur 1 bei einer weiteren Ausführungsform der Erfindung;
- Fig. 13: in vereinfachter Teildarstellung die Wischwelle, zusammen mit dem auf dieser Wischwelle befestigten Getrieberad;
- Fig. 14: verschiedene perspektivische Darstellungen zur Erläuterung der Verbindung der Wischwelle mit dem Getrieberad des elektromotorischen Wischerantriebs der Figur 12;
- Fig. 15: verschiedene perspektivische Darstellungen zur Erläuterung der Verbindung der Wischwelle mit dem Getrieberad des elektromotorischen Wischerantriebs der Figur 12, bei einer weiteren Ausführungsform;
- Fig. 16: und 17 in Darstellungen ähnlich der Figur 12 das Getriebe des Wischerantriebs in verschiedenen Zuständen nach dem Auslösen des Personenschutzes bzw. beim axialen Ausweichen der Wischwelle;
- Fig. 18: eine Darstellung ähnlich Figur 5, jedoch bei der Ausführungsform der Figuren 12-17.

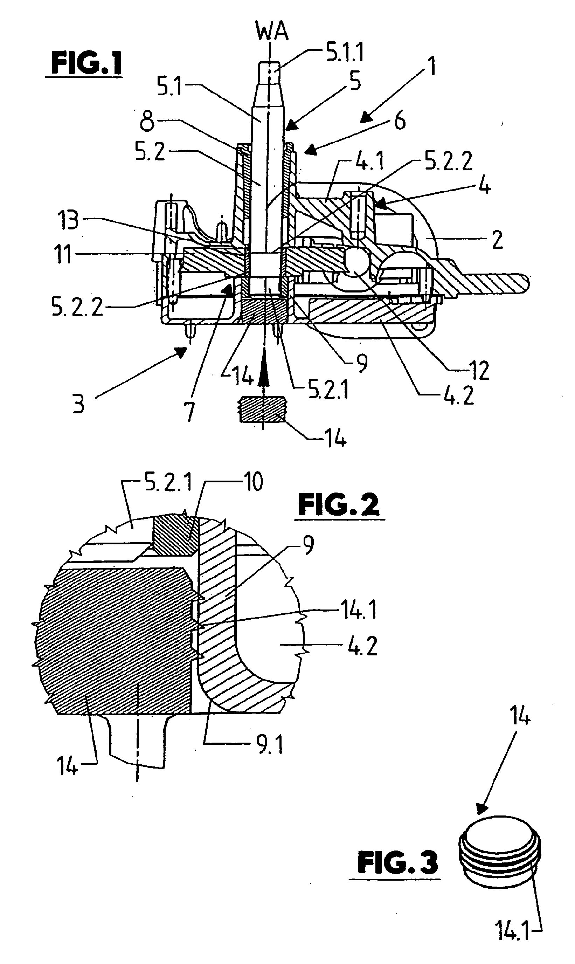

In den Figuren 1 - 4 ist 1 ein elektromotorischer Wischerantrieb, der in an sich bekannter Weise aus einem Elektromotor 2 und einem angeflanschten Getriebe 3, nämlich bei der dargestellten Ausführungsform aus einem angeflanschten Schneckengetriebe besteht.

In dem im Wesentlichen zweiteilig ausgebildeten Getriebegehäuse 4 des Getriebes 3 ist die die Ausgangswelle des Wischerantriebs 1 bildende Wischwelle 5 dreh- bzw. schwenkbar gelagert, und zwar derart, dass sie mit einer Wischwellenteillänge 5.1 aus dem Getriebegehäuse 4 vorsteht und an dieser Teillänge ein sich verjüngendes vorderes Wischwellenende 5.1.1 bildet, und zwar für die Befestigung eines nicht dargestellten Wischarmes nach der Montage des Wischerantriebs 1 in einem ebenfalls nicht dargestellten Fahrzeug. Mit ihrer anderen Wischwellenteillänge 5.2 ist Wischwelle 5 in dem dicht verschlossenen Getriebegehäuse 4 aufgenommen und dort einerseits in einem vorderen Wischwellenlager 6 und andererseits in einem rückwärtigen Wischwellenlager 7 gelagert. Das vordere Wischwellenlager 6 ist in einem an die Wischwellenteillänge 5.1 unmittelbar anschließenden Gehäuseteil 4.1 des Getriebegehäuses 4 mit einer Lagerbuchse 8 ausgebildet, und zwar derart, dass das Wischwellenlager 6 als reines Radial-Lager wirkt, also ein axiales Verschieben der Wischwelle 5 in der Wischwellenachse WA beim Auslösen der Schutzfunktion in der nachstehend noch näher beschriebenen Weise ermöglicht.

Das rückwärtige Wischwellenlager 7 ist in einem deckelartigen Gehäuseteil 4.2 des Getriebegehäuses 4 ausgebildet und besteht im Wesentlichen aus einem an dem Gehäuseteil 4.1 angeformten hülsenartigen Lagerabschnitt 9, der einen kreiszylinderförmigen In- und Außenquerschnitt aufweist, bei montiertem Wischerantrieb 1 achsgleich mit der Wischerwellenachse WA angeordnet ist und eine Öffnung 9.1 bildet, die als Freigabe- oder Ausweichöffnung dient und beidendig, d.h. sowohl zum Innenraum, als auch zur Außenseite des Getriebegehäuses bzw. des Gehäuseteils 4.2 hin offen ist, sowie aus einer in diesem Lagerabschnitt 9 aufgenommenen Lagerbuchse 10, in der die Wischwelle 5 mit ihrem den Ende 5.1.1 entfernt liegenden und von der Wischwellenteillänge 5.2 gebildeten Ende 5.2.1 drehbar gelagert ist.

Im Inneren des Getriebegehäuses 4 ist auf der Wischwellenteillänge 5.2 zwischen den beiden Wischwellenlagern 6 und 7 ein Getrieberad 11 vorgesehen. Dieses ist bei der dargestellten Ausführungsform als Schneckenrad ausgeführt, welches mit der an der Ausgangswelle 12 des Elektromotors 2 ausgebildeten Schnecke zusammenwirkt. Der die antriebsmäßige Verbindung zwischen dem Getrieberad 11 und der Wischwelle 5 ist das Getrieberad 11 mit einer die Wischwelle 5 umschließenden Buchse oder Hülse 13 versehen, die verdrehungssicher auf der Wischwelle 5 vorgesehen ist und auf der im normalen Betriebszustand des Wischerantriebs 1 auch das Getrieberad 11 verdrehungssicher bzw. formschlüssig gehalten ist. Für die verdrehungssichere Verbindung zwischen der Hülse 13 und der Wischwelle 5 ist letztere auf dem von dem Getrieberad 11 umschlossenen Abschnitt 5.2.2 der Wischwellenteillänge 5.2 mit einer Profilierung versehen, beispielsweise mit einer Vielzahl von sich parallel zur Wischwellenachse WA erstreckenden Stegen und dazwischen liegenden nutenförmigen Vertiefungen derart, dass in diese Profilierung formschlüssig eine entsprechende Gegenprofilierung an der Innenseite der Hülse 13 eingreift. Anstelle dieser Profilierung kann die drehfeste Verbindung zwischen der Hülse 13 und der Wischwelle 5 auch dadurch erreicht werden, dass die Wischwelle 5 in diesem Abschnitt einen von der Kreisform abweichenden Querschnitt aufweist. Durch eine Profilierung an der Außenfläche der Hülse 13 ist die kraftschlüssige Verbindung zwischen den Getrieberad 11 und dieser Hülse erreicht.

Über die Hülse 13 erfolgt im normalen Betriebszustand des Wischerantriebs 1 beispielsweise auch die axiale Sicherung der Wischwelle 4, d.h. die Hülse 13 wird hierfür stirnseitig mit einer Anlagefläche bzw. Axial-Abstützfläche am Gehäuseteil 4.1 bzw. mit einer stirnseitigen Fläche der Lagerbuchse 10 zusammen.

Die von dem Lagerabschnitt 9 gebildete Öffnung 9.1 ist an der Außenseite des Getriebegehäuses 4 durch ein stopfenartiges Rückhalte- oder Verschließelement 14 verschlossen, welches am Ende der Montage des Wischerantriebs 1 in diese Öffnung 9.1 von außen her eingesetzt wird und in dieser Öffnung durch Klemmsitz wiederlösbar gehalten ist, und zwar mit über die kreiszylinderförmige Umfangsfläche des Verschließelementes 14 wegstehenden, widerhakenartig ausgebildeten ringförmigen Vorsprüngen 14.1. Die Ausbildung ist weiterhin so getroffen, dass die von dem Lagerabschnitt 9 gebildete Öffnung 9.1 etwa zur Hälfte von der Lagerbuchse 10 und von dem Verschließelement 14 eingenommen wird. Mit dem Verschließelement 14 ist ein dichter Abschluss erreicht, so dass Fremdstoffe, insbesondere auch Feuchtigkeit oder Wasser sowie auch Staub nicht von außen her in das Innere des Getriebegehäuses 4 eindringen können. Das Verschließelement 14 besteht vorzugsweise aus einem gummielastischen Material, beispielsweise aus Gummi oder einem gummielastischen Kunststoff, z.B. TPE.

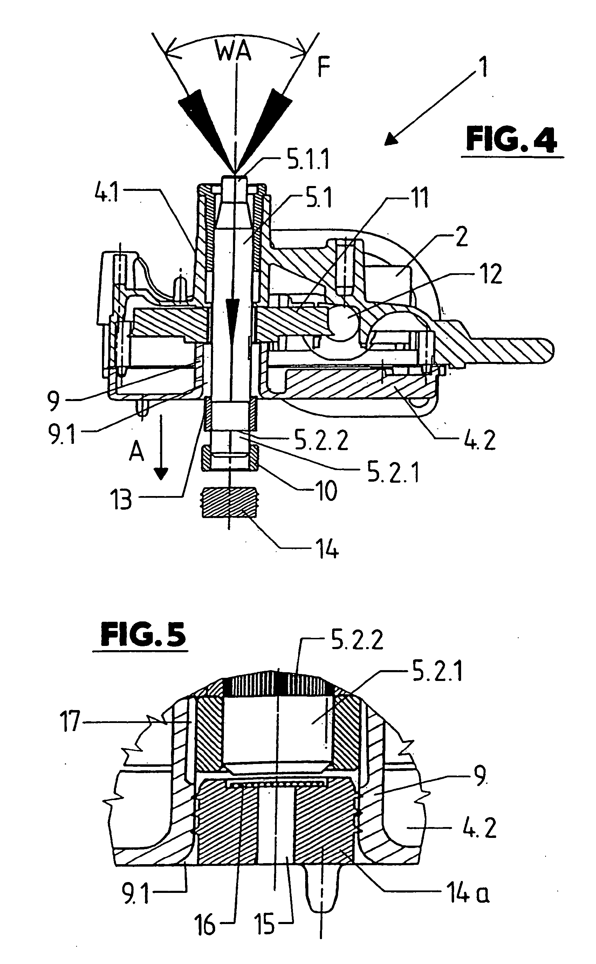

Erfolgt beispielsweise in Folge eines Unfalls eine äußere Krafteinwirkung auf die Wischwelle 5 und dabei insbesondere auf das Wischwellenende 5.1.1 mit einer Komponente in Richtung der Wischwellenachse WA, die (Komponente) eine Auslösekraft übersteigt, so erfolgt entsprechend Figur 4 ein axiales Verschieben bzw. Ausweichen der Wischwelle 5. Bei diesem axialen Ausweichen wird die Wischwelle 5 mit ihrem Ende 5.1.1 in Richtung Getriebegehäuse 4 und relativ zu diesem sowie auch relativ zum Getrieberad 11 derart verschoben, dass sie mit ihrem Ende 5.2.1 aus der Öffnung 9.1 des Lagerabschnitts 9 nach außen tritt. Hierbei erfolgt eine Trennung zwischen der Hülse 13 und dem Getrieberad 11 sowie auch ein Herausdrücken der Lagerbuchse 8 und des Verschließelementes 14 aus der Öffnung 9.1.

Die Auslösekraft ist bei dieser Ausführungsform im Wesentlichen bestimmt durch die Summe der Kräfte, die zum axialen Lösen oder Ausdrücken der Hülse 13 aus dem Getrieberad 11 sowie zum axialen Herausdrücken der Lagerbuchse 8 und des Verschließelementes 14 aus der Öffnung 9.1 des Lagerabschnittes 9 erforderlich sind, wobei diese Auslösekraft durch entsprechende konstruktive und/oder fertigungstechnische Maßnahmen in engen Grenzen sehr genau eingestellt werden kann. Weiterhin kann durch konstruktive Maßnahmen auch erreicht werden, dass die Auslösekraft im Wesentlichen durch diejenige Kraft bestimmt ist, die zum axialen Trennen der Hülse 13 vom Getrieberad 11 erforderlich ist.

Bevorzugt ist die Hülse 13 an ihrer Außenfläche leicht konisch ausgebildet, und zwar derart, dass der Außendurchmesser der Hülse 13 in Richtung zum Wischwellenende 5.1.1 hin abnimmt. Hierdurch wird bei Auslösen der Schutzfunktion das Trennen von Hülse 13 und Getrieberad 11 erleichtert. Durch entsprechende Wahl des Konuswinkels kann die Auslösekraft eingestellt werden. Die Hülse 13 ist mit ihrer konischen Form preiswert herstellbar. Die Wischwelle 5 kann - ausgenommen das Wischwellenende 5.1.1 - mit gleichbleibendem Querschnitt hergestellt werden.

Besteht das Getrieberad 11 aus Kunststoff, so ist dieses beispielsweise durch Umspritzen der Hülse 13 oder durch Umspritzen der bereits auf der Wischwelle 5 montierten Hülse 13 hergestellt. Auch andere Verfahren sind denkbar.

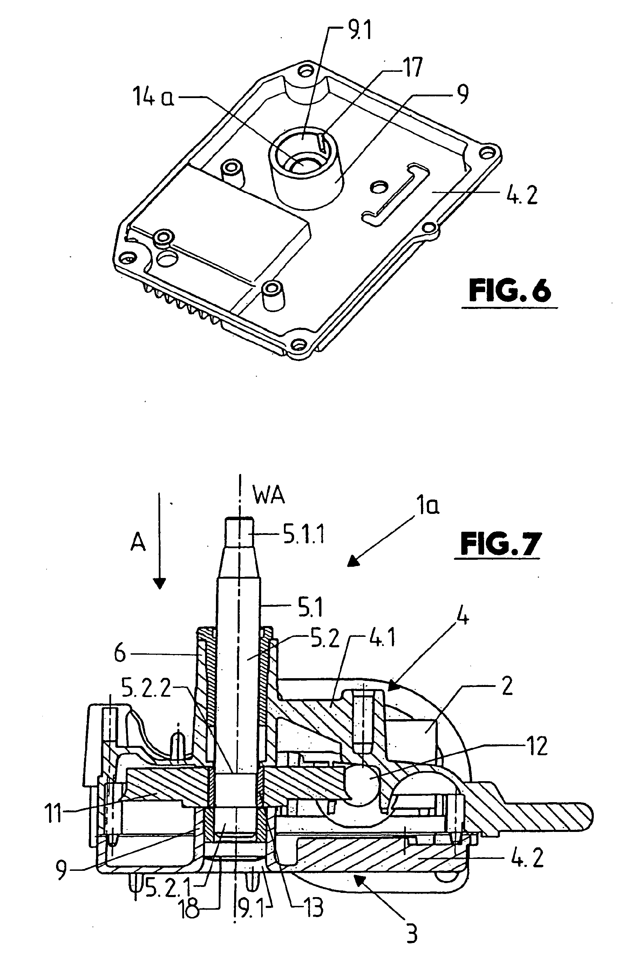

Die Figuren 5 und 6 zeigen eine leicht modifizierte Ausführungsform, bei der anstelle des als kreiszylinderförmiger Vollkörper hergestellten Verschließelementes 14 ein Verschließelement 14a verwendet ist, welches mit einem Belüftungskanal 15 versehen ist, der sich zwischen den beiden Stirnseiten des Verschließelementes 14a erstreckt und bei montiertem Verschließelement den Innenraum des Getriebegehäuses 4 mit der äußeren Umgebung verbindet, und zwar über eine Membrane 16, die an der im rückwärtigen Wischwellenlager 7 zugewandten Seite des Verschließelementes 14a in einer dort vorgesehenen Vertiefung aufgenommen ist und ein Eindringen von Fremdstoffen, insbesondere Schmutzpartikeln, aber auch von Feuchtigkeit und Wasser über den Belüftungskanal 15 in das Innere des Getriebegehäuses 4 verhindert. Wie die Figuren 5 und 6 weiterhin zeigen, ist bei dieser Ausführungsform die Innenfläche des Lagerabschnittes 9 mit einem sich in Richtung der Wischwellenachse WA erstreckenden Be- und Entlüftungsschlitz 17 versehen, der sich nur über die von der Lagerbuchse 8 eingenommene Teillänge der Öffnung 9.1 erstreckt und somit die Fortsetzung des Belüftungskanals 15 in das Innere des Getriebegehäuses 4 bildet.

Die Figur 7 zeigt in einer Darstellung wie Figur 1 als weitere Ausführungsform einen Wischerantrieb 1a, der sich von dem Wischerantrieb der Figur 1 im Wesentlichen dadurch unterscheidet, dass anstelle des Rückhalte- oder Verschließelementes 14 ein Rückhalte- oder Verschließelement 18 vorgesehen ist, welches als tellerartige Scheibe aus Flachmaterial ausgeführt ist, und zwar mit einem gewölbten Randbereich. Das Verschließelement 18 besteht aus einem Flachmaterial, beispielsweise aus einem metallischen Flachmaterial, z.B. mit federelastischen Eigenschaften, beispielsweise aus Federstahl. Das Verschließelement 18 kann aber auch aus einem anderen geeigneten Material, beispielsweise aus Kunststoff gefertigt sein.

Die antriebsmäßige Verbindung zwischen der Wischwelle 5 und dem Getrieberad 11 ist auch bei dieser Ausführungsform wieder über die Hülse 13 realisiert, die einerseits verdrehungssicher auf dem profilierten Abschnitt 5.2.2 der Wischwelle 5 angeordnet ist und andererseits formschlüssig mit dem Getrieberad 11 verbunden ist, und zwar bei der dargestellten Ausführungsform mit einer profilierten bzw. zahnradartig ausgebildeten Außenfläche.

Die Auslösekraft ist bei dieser Ausführungsform ebenfalls im Wesentlichen bestimmt durch die Summe der Kräfte, die zum axialen Lösen oder Ausdrücken der Hülse 13 aus dem Getrieberad 11 sowie zum axialen Herausdrücken der Lagerbuchse 8 und des Verschließelementes 14 aus der Öffnung 9.1 des Lagerabschnittes 9 erforderlich sind, wobei diese Auslösekraft durch entsprechende konstruktive und/oder fertigungstechnische Maßnahmen in engen Grenzen sehr genau eingestellt werden kann. Weiterhin kann durch konstruktive Maßnahmen auch erreicht werden, dass die Auslösekraft im Wesentlichen durch diejenige Kraft bestimmt ist, die zum axialen Trennen der Hülse 13 vom Getrieberad 11 erforderlich ist.

Bevorzugt ist die Hülse 13 an ihrer Außenfläche leicht konisch ausgebildet, und zwar derart, dass der Außendurchmesser der Hülse 13 in Richtung zum Wischwellenende 5.1.1 hin abnimmt. Hierdurch wird bei Auslösen der Schutzfunktion das Trennen von Hülse 13 und Getrieberad 11 erleichtert. Durch entsprechende Wahl des Konuswinkels kann die Auslösekraft eingestellt werden. Die Hülse 13 ist mit ihrer konischen Form preiswert herstellbar. Die Wischwelle 5 kann - ausgenommen das Wischwellenende 5.1.1 - mit gleichbleibendem Querschnitt hergestellt werden.

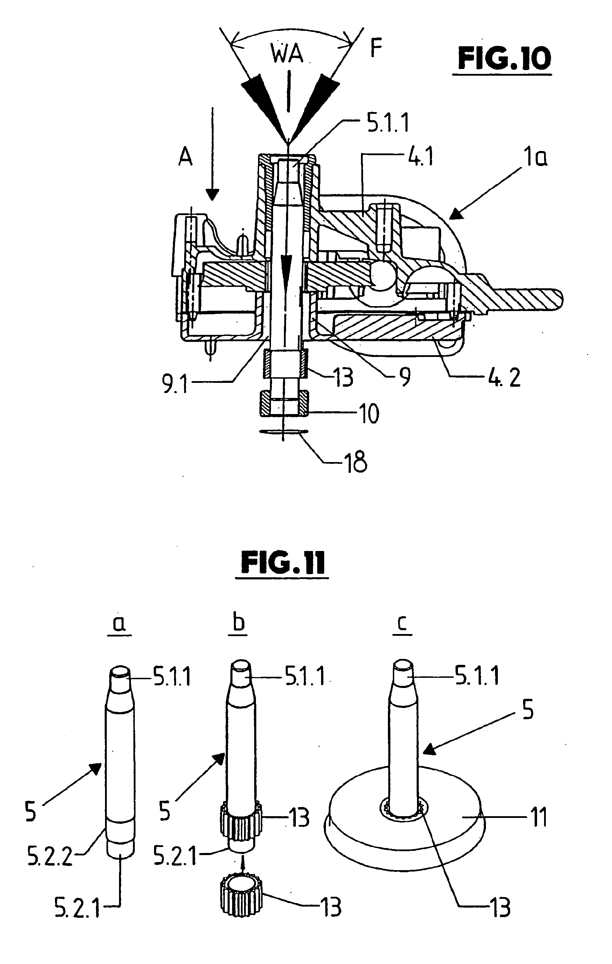

Die Figur 11 zeigt in Positionen a - c jeweils in perspektivischer Darstellung verschiedene Schritte bei Fertigung der Wischwelle 5 mit dem Getrieberad 11. In der Position a ist die Wischwelle 5 mit dem profilierten Abschnitt 5.2.2 dargestellt, dessen Profilierung wiederum beispielsweise von einer Vielzahl von sich in Richtung der Wischwellenachse WA erstreckenden Stegen und dazwischen liegenden Vertiefungen gebildet ist. Auf diesen Abschnitt 5.2.2 wird entsprechend der Position b der Figur 11 die vorgefertigte Hülse 13 aufgeschoben und durch Presssitz befestigt. Die Hülse 13 besteht dabei beispielsweise aus einem metallischen Werkstoff oder einem geeigneten Kunststoff. Entsprechend der Position c wird dann in einem Spritzgießverfahren durch Umspritzen der auf der Wischwelle 5 befestigten Hülse 13 das Getrieberad 11 aus einem geeigneten Kunststoff gefertigt.

Der Vorteil dieser Ausführung besteht u.a. darin, dass eine sehr zuverlässige und hochqualitative Presssitzverbindung zwischen der Wischwelle und der Hülse 13 und außerdem mit einfachen Mitteln auch eine formschlüssige Verbindung zwischen der Hülse 13 und dem Getrieberad 11 erreichbar sind, und zwar insbesondere auch in der Weise, dass ein hohes Drehmoment vom Getrieberad auf die Wischwelle 5 übertragbar ist, gleichzeitig aber - insbesondere bei einer leicht konischen Ausbildung der Hülse 13 an ihrer Außenfläche - für die Schutzfunktion die Möglichkeit einer Trennung zwischen der Hülse 13 und dem Getrieberad 11 für eine axiale Ausweichbewegung der Wischwelle 5 besteht.

Die Hülse 13 kann preiswert gefertigt werden. Die für die formschlüssige Verbindung zwischen der Hülse 13 und dem Getrieberad 11 an diesem erforderliche Gegenprofilierung wird bei dem Formen des Getrieberades automatisch erzeugt, so dass sich auch eine Vereinfachung des für die Herstellung des Getrieberades 11 erforderlichen Werkzeugs ergibt.

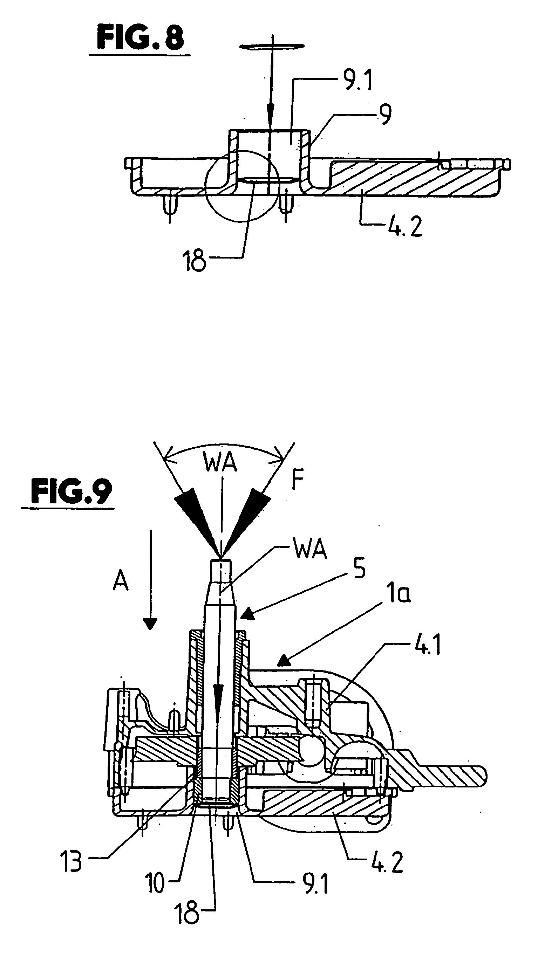

Das Verschließelement 18 ist in der von dem Lagerabschnitt 9 gebildeten Lageröffnung 9.1 derart montiert, dass die durch die Wölbung im Randbereich erzeugte konkave Seite des Verschließelementes 18 dem rückwärtigen Wischwellenlager 7 bzw. dem in der Lagerbuchse 8 gelagerten Wischwellenende 5.2.1 zugewandt ist. Wie in der Figur 8 angedeutet, wird bei der Montage des Wischerantriebs 1a das jeweilige Verschließelement 18 von der Innenseite des Gehäuseteils 4.2 her in die Öffnung 9.1 eingesetzt, und zwar mit der konvexen Seite voraus. Erst dann erfolgt bei der weiteren Montage das Einführen der Lagerbuchse 8 in die Öffnung 9.1.

Durch die konkave Wölbung des Verschließelementes 18 an seiner den Innenraum des Getriebegehäuses 4 zugewandten Seite ist auch bei dieser Ausführungsform beim Einwirken einer die Auslösekraft übersteigenden Krafteinwirkung auf die Wischwelle 5 ein axiales Ausweichen dieser Wischwelle mit ihrem Ende 5.2.2 durch die Öffnung 9.1 möglich, und zwar in der gleichen Weise, wie dies vorstehend im Zusammenhang mit den Figuren 1-6 beschrieben wurde und in den Figuren 9 und 10 dargestellt ist, wobei bei diesem Ausweichen mit der sich durch das Getriebegehäuse 4 und das Getrieberad 11 axial bewegenden Wischwelle 5 auch das Verschließelement 18 aus der Öffnung 9.1 herausgedrückt wird.

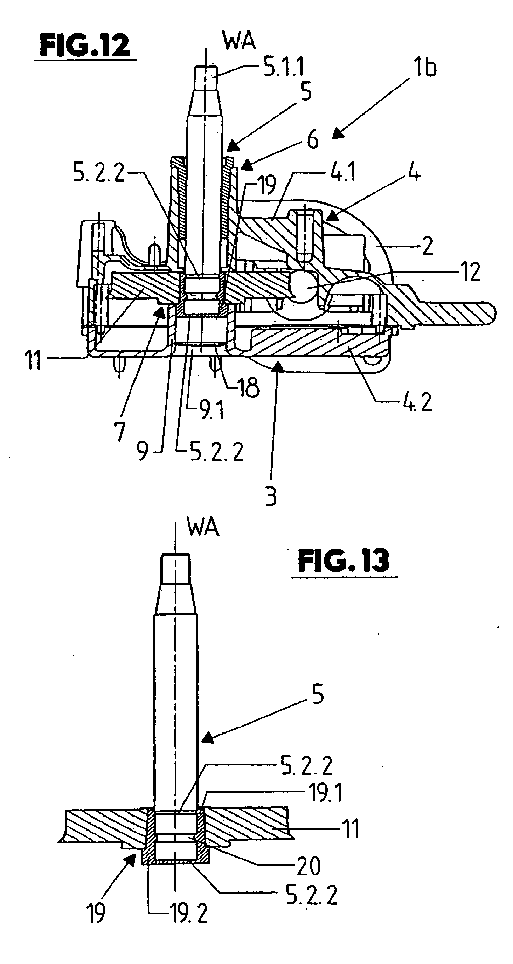

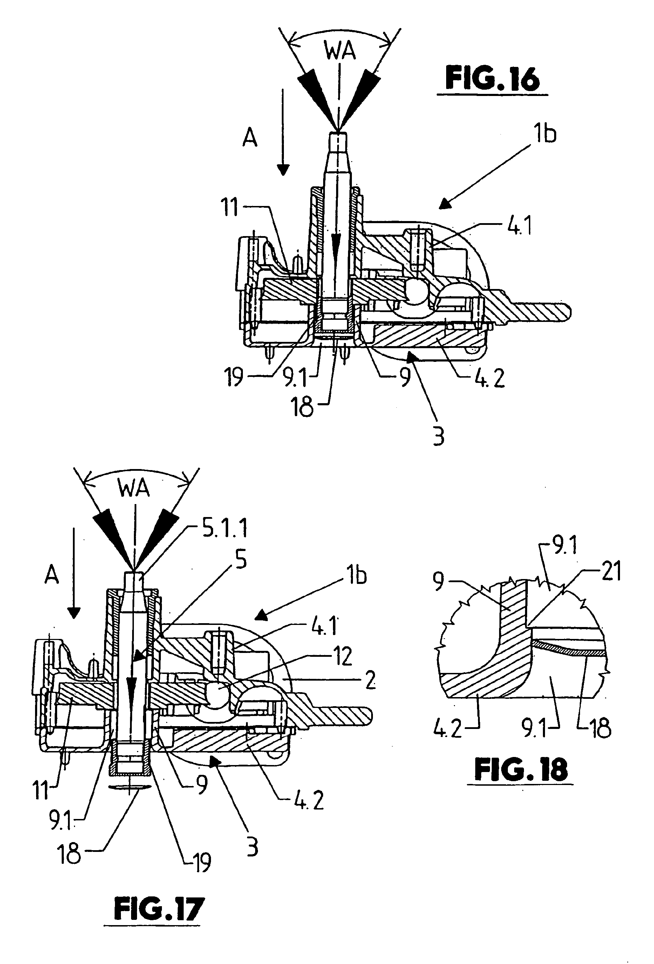

Die Figuren 12-18 zeigen als weitere Ausführungsform einen Wischerantrieb 1b, der sich von dem Wischerantrieb 1a im Wesentlichen dadurch unterscheidet, dass anstelle der Hülse 13 eine Hülse 19 verwendet ist, die verdrehungssicher und axial nicht verschiebbar auf der Wischwelle 5 vorgesehen ist, und zwar bei dieser Ausführungsform dadurch, dass die Wischwelle 5 zwei axial voneinander beabstandete profilierte Abschnitte 5.2.2 und dazwischen liegend eine die Wischwellenachse WA umschließende Nut 20 aufweist. Die beiden profilierten Abschnitte 5.2.2 sind formschlüssig von der Hülse 19 umgriffen, die mit einem ringartigen Vorsprung in die Nut 20 eingreift. Auf einer Teillänge 19.1 ist die Hülse 19 formschlüssig von dem Getrieberad 11 umgriffen. Mit einer Teillänge 19.2 bildet die Hülse 19 zusammen mit der Innenfläche 9.1 des Lagerabschnittes 9 ein rückwärtiges Wischwellenlager 7, d.h. ein zusätzliches Radialstützlager.

Die Profilierung der Abschnitte 5.2.2 der Wischwellenteillänge 5.2 ist beispielsweise wiederum von Vielzahl von sich parallel zur Wischwellenachse WA erstreckenden Stegen und dazwischen liegenden nutenförmigen Vertiefungen gebildet, und zwar derart, dass in diese Profilierung formschlüssig eine entsprechende Gegenprofilierung an der Innenfläche der Hülse 19 eingreift. Anstelle dieser Profilierung kann die drehfeste Verbindung zwischen der Hülse 19 und der Wischwelle 5 auch dadurch erreicht werden, dass die Wischwelle 5 in den Abschnitten 5.2.2 einen von der Kreisform abweichenden Querschnitt aufweist. Durch eine Profilierung an der Außenfläche der Hülse 19 ist die kraftschlüssige Verbindung zwischen den Getrieberad 11 und dieser Hülse erreicht.

Im Normalbetrieb ist die Wischwelle 5 durch das Zusammenwirken von gehäuseseitigen und wischwellenseitigen axialen Abstützflächen axial gesichert. Bei einer eine Auslösekraft übersteigenden Krafteinwirkung auf die Wischwelle 3, beispielsweise in Folge eines Unfalls erfolgt wiederum ein axiales Ausweichen bzw. Verschieben der Wischwelle 5 relativ zum Getriebegehäuse 4 sowie zum Getrieberad 11 in der Weise, dass sich das Wischwellenende 5.1.1 in Richtung des Getriebegehäuses 4 bewegt, und zwar unter Lösen der Verbindung zwischen der Hülse 19 und dem Getrieberad 11, so dass entsprechend den Figuren 10 und 11 die Wischwelle 5 unter Mitführung der Hülse 19 mit ihrem Ende 5.2.1 aus der Öffnung 9.1 des Lagerabschnitts 9 an der Rückseite des Getriebegehäuses 4 austritt und hierbei auch das Verschließelement 18 entfernt wird.

Um bei der Montage des Verschließelementes 18 die mit der Teillänge 19.2 der Hülse 19 zusammenwirkende Lagerfläche bzw. Innenfläche der Öffnung 9.1 nicht zu beschädigen, weist die Öffnung 9.1 bei dieser Ausführungsform dort, wo das Verschließelement montiert wird, unter Bildung eines Absatzes 21 einen etwas reduzierten Durchmesser auf. Weiterhin ist auch der Außendurchmesser des Verschließelementes 18 im noch nicht montiertem Zustand kleiner als der Durchmesser, den die Öffnung 9.1 in dem zur Lagerung der Hülse 19 dienenden Abschnitt besitzt.

Die Verwendung des Verschließelementes 18 hat wiederum den Vorteil, dass für die Schutzfunktion ein axiales Ausweichen bzw. Verschieben der Wischwelle 5 relativ zum Getriebegehäuse und dem Getrieberad 11 möglich ist, d.h. im Extremfall die Wischwelle 5 mit ihren Wischwellenende 5.1.1 vollständig in das Getriebegehäuse 4 hineingeschoben werden kann und dabei mit ihrem Ende 5.2.1 aus der Öffnung 9.1 austritt, dass aber dennoch im normalen Betriebszustand das Getriebegehäuse 4 durch das Verschließelement 18 dicht verschlossen und ein Eindringen von Fremdstoffen, insbesondere auch von Feuchtigkeit oder Wasser in den Innenraum des Getriebegehäuses 4 ausgeschlossen ist.

Die Auslösekraft ist bei dieser Ausführungsform wiederum im Wesentlichen durch die Kraft bestimmt, die zum Lösen der Hülse 19 vom Getrieberad 11 erforderlich ist, weiterhin aber auch durch die Kraft, die benötigt wird, damit die Hülse 19 den Absatz 21 überwinden kann. Die Auslösekraft kann durch entsprechende konstruktive und/oder fertigungstechnische Maßnahmen in engen Grenzen sehr genau eingestellt werden kann. Weiterhin kann durch konstruktive Maßnahmen auch erreicht werden, dass die Auslösekraft im Wesentlichen durch diejenige Kraft bestimmt ist, die zum axialen Trennen der Hülse 19 vom Getrieberad 11 erforderlich ist.

Wie insbesondere aus der Figur 13 ersichtlich, ist die Hülse 19 zumindest an der Außenfläche der Teillänge 19.1 leicht konisch ausgebildet, und zwar derart, dass der Außendurchmesser der Hülse 19 in Richtung zum Wischwellenende 5.1.1 hin abnimmt. Hierdurch wird bei Auslösen der Schutzfunktion das Trennen von Hülse 19 und Getrieberad 11 erleichtert. Durch entsprechende Wahl des Konuswinkels kann die Auslösekraft eingestellt werden. Die Hülse 19 ist mit ihrer konischen Form preiswert herstellbar. Die Wischwelle 5 kann - ausgenommen das Wischwellenende 5.1.1 - mit gleichbleibendem Querschnitt hergestellt werden.

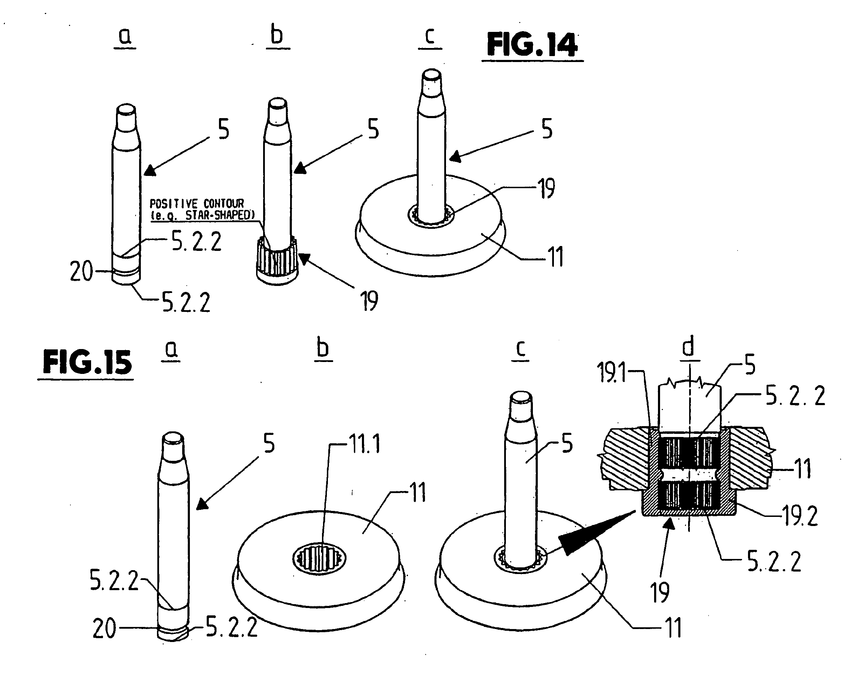

Die Figur 14 zeigt eine Möglichkeit der Ausbildung des Getrieberades 11 an der Wischwelle 5. Entsprechend der Position a wird die Wischwelle an der Teillänge 5.2 im Bereich des dortigen Wischwellenendes mit den beiden, axial voneinander beabstandeten, profilierten Abschnitten 5.2.2 und der dazwischen liegenden Umfangsnut 20 versehen. Im Anschluss daran wird entsprechend der Position b auf der Wischwelle 5 durch Umspritzen die Hülse 19 erzeugt, und zwar mit der für die formschlüssige Verbindung mit dem Getrieberad 11 erforderlichen profilierten, d.h. bei der dargestellten Ausführungsform zahnradartig ausgebildeten Umfangsfläche. Die Hülse 19 ist an ihrer Außenfläche leicht konisch bzw. kegelstumpfförmig ausgebildet. In einem weiteren Verfahrensschritt wird dann entsprechend der Position c der Figur 14 das Getrieberad 11 durch Umspritzen der Hülse 19 erzeugt.

Dieses Verfahren ermöglicht eine Verbindung zwischen dem Getrieberad 11 und der Wischwelle, die die Übertragung hoher Drehmomente zulässt und einfach und preiswert realisierbar ist, sowie auch für die Schutzfunktion eine axiale Verschiebung der Wischwelle 5 relativ zum Getrieberad ermöglicht. Weiterhin besteht die Möglichkeit, die Wischwelle 5 preiswert mit einem im Wesentlichen gleich bleibenden Durchmesser zu fertigen, und zwar mit Ausnahme des sich verjüngenden Endes 5.1.1, sowie die Materialwahl für das Getrieberad 11 und die Hülse 19 der jeweiligen Anforderung entsprechend optimal zu wählen.

Die Figur 15 zeigt in Positionen a - d die Verfahrensschritte zum Verbinden der Wischwelle 5 mit dem Getrieberad 11 bei einer weiteren möglichen Ausführungsform. Entsprechen der Positionen a und b werden zunächst die Wischwelle 5 mit den beiden Abschnitten 5.2.2 und der dazwischen liegenden Umfangsnut 20 sowie das Getrieberad 11 beispielsweise durch Spritzgießen bereitgestellt, und zwar letzteres mit einer eine Profilierung aufweisenden Öffnung 11.1. Die Profilierung ist dabei nach Art einer Verzahnung mit einer Vielzahl von Vorsprüngen oder dazwischen liegenden Vertiefungen ausgeführt. Entsprechend der Position c werden die Wischwelle 5 und das vorgeformte Getrieberad 11 in einer Spritzgießform derart angeordnet, dass die Wischwelle 5 mit ihrem die Abschnitte 5.2.2 aufweisenden Ende in der Öffnung 11.1 ausgerichtet aufgenommen ist. Durch Spritzgießen wird dann die die Wischwelle im Bereich der Abschnitte 5.2.2 am Umfang umschließende sowie auch am Ende 5.2.1 stirnseitig abdeckende Hülse 19 gebildet, und zwar u.a. auch so, dass der Kunststoff den Spalt zwischen dem Getrieberad 11 und der Wischwelle 5 ausfüllt.

Der besondere Vorteil dieser Ausführung besteht wiederum u.a. in einer preiswerten Realisierung der Verbindung zwischen der Wischwelle und dem Getrieberad. Die Materialien für das Getrieberad 11 und die Hülse 19 können den jeweiligen Anforderungen entsprechend optimal gewählt werden. Die Auslösekraft ist in engen Grenzen durch die Materialwahl sowie durch die leicht konische Ausbildung der Hülse 19 zumindest an ihrer Teillänge 19.1 sowie auch durch die Form und Tiefe der Umfangsnut 20 optimal einstellbar. Zur Erzielung reproduzierbarer Ergebnisse, insbesondere auch hinsichtlich der Einstellung der Auslösekraft trägt weiterhin bei, dass bei dieser in der Figur 15 dargestellten Ausführung beim Verbinden des Getrieberades 11 mit der Wischwelle 5 kein Schrumpfen des relativ großen Kunststoffvolumens des Getrieberades 11 erfolgt und somit hierdurch bedingte Einflüsse auf die axiale Auslösekraft vermieden sind.

Die Erfindung wurde voranstehend an verschiedenen Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, das jeweilige Verschließelement so auszubildenden, dass es ebenfalls entscheidend oder aber ausschließlich oder im Wesentlichen ausschließlich die Auslösekraft mit bestimmt und/oder beispielsweise als axiales Abstützelement für die Wischwelle 5 dient. Letzteres kann beispielsweise dadurch erreicht werden, dass das Verschließelement als axiales Abstützlager für das Wischwellenende 5.2.1 ausgebildet ist oder aber eine mittelbare axiale Abstützung der Wischwelle 5 z.B. über die Lagerbuchse 10 bewirkt, die sich dann ihrerseits axial gegen die formschlüssig auf der Wischwelle 5 angeordnete Hülse 13 abstützt.

### Bezugszeichenliste

- 1,1a,1b: Wischerantrieb
- 2: Elektromotor
- 3: Getriebe
- 4: Getriebegehäuse
- 4.1, 4.2: Gehäuseteil
- 5: Wischwelle
- 5.1: im Normalbetrieb aus dem Getriebegehäuse vorstehende Teillänge der Wischwelle
- 5.2: im Normalbetrieb im Getriebegehäuse aufgenommene Teillänge der Wischwelle
- 5.1.1: Wischwellenende
- 5.2.1: Wischwellenende
- 5.2.2: profilierter Abschnitt der Wischwelle
- 6: vorderes Wischwellenlager
- 7: rückwärtiges Wischwellenlager
- 8: Lagerbuchse
- 9: im Gehäuseteil 4.2 gebildeter Lagerabschnitt
- 9.1: Öffnung des Lagerabschnittes
- 10: Lagerbuchse
- 11: Getrieberad (Steckenrad)
- 11.1: Öffnung des Getrieberades
- 12: Ausgangswelle des Elektromotors
- 13: Verbindungselement oder Buchse
- 14, 14a: Verschließelement
- 14.1: ringförmiger Vorsprung
- 15: Belüftungskanal
- 16: Membran
- 17: Schlitz
- 18: Verschließelement
- 19: Verbindungselement oder Hülse
- 19.1, 19.2: Teillänge der Hülse 19
- 20: Nut
- 21: Absatz
- F: Krafteinwirkung
- A: axiales Ausweichen der Wischwelle
- WA: Wischwellenachse

## Patentansprüche

1. Elektromotorischer Wischerantrieb mit einer die Ausgangswelle dieses Antriebes bildenden Wischwelle (5), die mit einer ein erstes Wischwellenende (5.1.1) bildenden und zur Befestigung eines Wischarmes dienenden Wischwellenteillänge (5.1) über eine erste Gehäuseseite eines Gehäuses (4) des Antriebs (1, 1a, 1 b) vorsteht und mit ihrer übrigen Wischwellenteillänge (5.2) in dem nach außen hin geschlossenen Gehäuse (4) aufgenommen und in diesem gelagert ist, sowie mit einem auf der Wischwelle (5) im Inneren des Gehäuses (4) vorgesehenen Getrieberad (11) für eine antriebsmäßige Verbindung der Wischwelle (5) mit einem Antriebsmotor (2), wobei die Wischwelle (5) bei einer eine Auslösekraft übersteigenden axialen Krafteinwirkung für eine axiale Ausweichbewegung mit ihren ersten Wischwellenende (5.1.1) in Richtung zum Gehäuse (4) und dabei relativ zu diesem sowie relativ zum Getrieberad (11) bewegbar ist, wobei die Wischwelle (5) bei der axialen Ausweichbewegung mit einem dem ersten Wischwellenende (5.1.1) entfernt liegenden zweiten Wischwellenende (5.2.1) durch Öffnen des Gehäuses (4) an einer der ersten Gehäuseseite gegenüberliegenden zweiten Gehäuseseite austritt, **gekennzeichnet durch** ein die Wischwelle (5) umschließendes hülsenartiges Verbindungselement (13, 19) zur antriebsmäßigen Verbindung zwischen der Wischwelle (5) und dem Getrieberad (11), wobei das Verbindungselement (13, 19) zumindest auf einer Teillänge von dem Getrieberad (11) formschlüssig umschlossen ist und an dieser Teillänge an seiner Außenfläche kegelstumpfförmig gebildet ist, und zwar mit einem sich in Richtung zum ersten Wischwellenende (5.1.1) hin verringernden Durchmesser.

2. Elektromotorischer Wischerantrieb nach Anspruch 1, **dadurch gekennzeichnet, dass** das Gehäuse (4) an der der ersten Gehäuseseite gegenüberliegenden zweiten Gehäuseseite eine Öffnung (9.1) aufweist, die durch ein bei der axialen Ausweichbewegung der Wischwelle (5) von dieser entfernbares und/oder herausdrückbares Verschließelement (14, 14a, 18) verschlossen ist, wobei das Verschließelement (14, 14a, 18) durch Klemmsitz in der Öffnung (9.1) gehalten ist.

3. Elektromotorischer Wischerantrieb nach Anspruch 2, **dadurch gekennzeichnet, dass** das Verschließelement (14a) wenigstens einen Belüftungskanal (15), vorzugsweise mit einer Membrane (16) aufweist.

4. Elektromotorischer Wischerantrieb nach Anspruch 2 oder 3, **dadurch gekennzeichnet, dass** das hülsenartige Verbindungselement (19) mit einer Teillänge (19.2) ein mit der Innenfläche der Öffnung (9.1) zusammenwirkendes Lagerelement für die Wischwelle (5) bildet.

5. Elektromotorischer Wischerantrieb nach einem der Ansprüche 2-4, **dadurch gekennzeichnet, dass** das hülsenartige Verbindungselement (13, 19) verdrehungssicher auf der Wischwelle (5) vorgesehen ist, vorzugsweise auf wenigstens einem profilierten Abschnitt (5.2.2) der Wischwelle (5) und/oder auf wenigstens einem Abschnitt der Wischwelle (5), der einen von der Kreisform abweichenden Querschnitt aufweist.

6. Elektromotorischer Wischerantrieb nach einem der vorhergehenden Ansprüche, **dadurch gekennzeichnet, dass** das hülsenartige Verbindungselement (13, 19) axial nicht verschiebbar auf der Wischwelle (5) vorgesehen ist,

7. Elektromotorischer Wischerantrieb nach einem der vorhergehenden Ansprüche, **dadurch gekennzeichnet, dass** die Wischwelle (5) und das Getrieberad (11) für die axiale Ausweichbewegung im Bereich des Verbindungselementes (13, 18) trennbar sind.

8. Elektromotorischer Wischerantrieb nach Anspruch 7, **dadurch gekennzeichnet, dass** die Trennung für die axiale Ausweichbewegung zwischen dem auf der Wischwelle (5) verbleibenden Verbindungselement (13, 19) und dem Getrieberad (11) erfolgt.

9. Elektromotorischer Wischerantrieb nach einem der vorhergehenden Ansprüche, **dadurch gekennzeichnet, dass** bei der axialen Ausweichbewegung die Lagerbuchse (10) an dem zweiten Wischwellenende (5.2.1) und/oder das hülsenartige Verbindungselement (13, 19) mit der Wischwelle (5) mitbewegt und dabei bevorzugt aus dem Gehäuse (4) herausbewegt werden.

10. Elektromotorischer Wischerantrieb nach einem der vorhergehenden Ansprüche, **dadurch gekennzeichnet, dass** das hülsenartige Verbindungselement (13, 19) aus einem metallischen Werkstoff oder aus Kunststoff besteht.

11. Elektromotorischer Wischerantrieb nach einem der vorhergehenden Ansprüche, **dadurch gekennzeichnet, dass** das hülsenartige Verbindungselement (13) durch Presssitz auf der Wischwelle (5) gehalten ist.

12. Elektromotorischer Wischerantrieb nach einem der vorhergehenden Ansprüche, **dadurch gekennzeichnet, dass** das hülsenartige Verbindungselement (13, 19) durch Umspritzen der Wischwelle (5) erzeugt ist.

13. Elektromotorischer Wischerantrieb nach einem der vorhergehenden Ansprüche, **dadurch gekennzeichnet, dass** das Getrieberad (11) durch Umspritzen des Verbindungselementes (13) erzeugt ist.

14. Elektromotorischer Wischerantrieb nach einem der vorhergehenden Ansprüche, **dadurch gekennzeichnet, dass** das hülsenartige Verbindungselement (19) durch Spritzgießen aus Kunststoff bei Verwendung der in eine Spritzgießform eingesetzten Wischwelle und des in die Spritzgießform eingesetztem, vorgefertigtem Getrieberades (11) erzeugt ist.

15. Elektromotorischer Wischerantrieb nach einem der vorhergehenden Ansprüche, **dadurch gekennzeichnet, dass** das Verbindungselement (19) die Wischwelle (5) an ihrem zweiten Wischwellenende (5.2.1) stirnseitig umschließt.

16. Elektromotorischer Wischerantrieb nach einem der vorhergehenden Ansprüche, **dadurch gekennzeichnet, dass** die Auslösekraft zumindest teilweise durch den Konus oder Kegelwinkel der kegelstumpfförmigen Außenfläche des hülsenartigen Verbindungselementes (13, 19) eingestellt ist.

17. Elektromotorischer Wischerantrieb nach einem der vorhergehenden Ansprüche, **dadurch gekennzeichnet, dass** das Gehäuse (4) das Getriebegehäuse des Wischerantriebs ist.

## Claims

1. Electromotive wiper drive with a wiper shaft (5) forming the output shaft of this drive which (wiper shaft), with a wiper shaft partial length (5.1) forming a first wiper shaft end (5.1.1.) and serving for fixing a wiper arm, projects over a first housing side of a housing (4) of the drive (1, 1a, 1b) and the remaining wiper shaft partial length (5.2) of which is received in the housing (4) closed in the outwards direction and is mounted in the latter and with a pinion (11) provided on the wiper shaft (5) inside the housing (4) for connection of the wiper shaft (5) in the manner of a drive to a drive motor (2), wherein the wiper shaft (5), in case of axial exertion of force exceeding a triggering force, is moveable for an axial deflection movement with its first wiper shaft end (5.1.1) in the direction of the housing (4) and at the same time relative to the latter and relative to the pinion (11), wherein the wiper shaft (5), during the axial deflection movement with a second wiper shaft end (5.2.1) distant from the first wiper shaft end (5.1.1) emerges by opening the housing (4) on a second housing side opposite to the first housing side, **characterised by** a bush-like connecting element (13, 19) surrounding the wiper shaft (5) for a connection in the manner of a drive between the wiper shaft (5) and the pinion (11), wherein the connecting element (13, 19), at least over a partial length, is positively enclosed by the pinion (11) and is designed in the form of a truncated cone on its outer surface over this partial length and to be more precise, with a diameter decreasing in the direction towards the first wiper shaft end (5.1.1).

2. Electromotive drive according to claim 1, **characterised in that** the housing (4) presents an opening (9.1) on the second housing side opposite the first housing side which (opening) is closed by a closing element (14, 14a, 18) removable from or capable of being pushed out of the wiper shaft (5) during the axial deflection of the latter, wherein the closing element (14, 14a, 18) is held by clip fitting in the opening (9.1).

3. Electromotive wiper drive according to claim 2, **characterised in that** the closing element (14a) has at least one ventilation duct (15), preferably with a membrane (16).

4. Electromotive wiper drive according to claim 2 or 3, **characterised in that** a partial length (19.2) of the bush-like connecting element (19) forms a bearing element interacting with the inside surface of the opening (9.1) for the wiper shaft (5).

5. Electromotive wiper drive according to one of claims 2-4, **characterised in that** the bush-like connecting element (13, 19) is provided in a torque-proof fashion on the wiper shaft (5), preferably on at least one profiled section (5.2.2) of the wiper shaft (5) and/or on at least one section of the wiper shaft (5), which presents a cross-section differing from a circular shape.

6. Electromotive wiper drive according to one of the above claims, **characterised in that** the bush-like connecting element (13, 19) is provided to be axially immovable on the wiper shaft (5).

7. Electromotive wiper drive according to one of the above claims, **characterised in that** the wiper shaft (5) and the pinion (11) are separable for the axial deflection movement in the area of the connecting element (13, 18).

8. Electromotive wiper drive according to claim 7, **characterised in that** the separation for the axial deflection movement occurs between the connecting element (13, 19) remaining on the wiper shaft (5) and the pinion (11).

9. Electromotive wiper drive according to one of the above claims, **characterised in that** during the axial deflection movement, the bearing bush (10) on the second wiper shaft end (5.2.1) and/or the bush-like connecting element (13, 19) moves with the wiper shaft (5) and in so doing is preferably moved out of the housing (4).

10. Electromotive wiper drive according to one of the above claims, **characterised in that** the bush-like connecting element (13, 19) consists of a metallic material or plastic.

11. Electromotive wiper drive according to one of the above claims, **characterised in that** the bush-like connecting element (13) is held by a press fit on the wiper shaft (5).

12. Electromotive wiper drive according to one of the above claims, **characterised in that** the bush-like connecting element (13, 19) is created by injection around the wiper shaft (5).

13. Electromotive wiper drive according to one of the above claims, **characterised in that** the pinion (11) is created by injection around the connecting element (13).

14. Electromotive wiper drive according to one of the above claims, **characterised in that** the bush-like connecting element (19) is created by injection moulding from plastic using the wiper shaft inserted into an injection mould and using the pre-manufactured pinion (11) placed in the injection mould.

15. Electromotive wiper drive according to one of the above claims, **characterised in that** the connecting element (19) surrounds the wiper shaft (5) on the front side on its second wiper shaft end (5.2.1).

16. Electromotive wiper drive according to one of the above claims, **characterised in that** the triggering force is adjusted at least partially by the cone or taper angle of the truncated cone-shaped outer surface of the bush-like connection element (13, 19).

17. Electromotive wiper drive according to one of the above claims, **characterised in that** the housing (4) is the drive housing of the wiper drive.

## Revendications

1. Commande d'essuie-glace à moteur électrique comportant un arbre d'essuyage (5) formant l'arbre de sortie de cette commande, lequel arbre d'essuyage dépasse d'une partie de sa longueur (5.1), formant une première extrémité (5.1.1) d'arbre d'essuyage et servant à fixer un bras d'essuyage, d'un premier côté du carter (4) de la commande (1, 1a, 1b) et qui est logé, avec le reste de sa longueur (5.2) dans le carter (4) fermé vers l'extérieur et positionné dans celui-ci, et comportant une roue de transmission (11) prévue sur l'arbre d'essuyage (5) à l'intérieur du carter (4) pour une liaison entraînante de l'arbre d'essuyage (5) avec un moteur d'entraînement (2), l'arbre d'essuyage (5) lors de l'action d'une force axiale supérieure à une force de déclenchement, pouvant se déplacer pour un mouvement de déport axial avec sa première extrémité (5.1.1) en direction du carter (4) et donc par rapport à celui-ci et par rapport à la roue de transmission (11), l'arbre d'essuyage (5), lors du mouvement de déport axial, sortant, avec une deuxième extrémité (5.2.1) éloignée de la première (5.1.1) sur un deuxième côté de carter opposé au premier du fait de l'ouverture du carter (4), **caractérisée par** un élément de liaison (13, 19), de type manchon, enserrant l'arbre d'essuyage (5) pour la liaison entraînante entre l'arbre d'essuyage (5) et la roue de transmission (11), l'élément de liaison (13, 19) étant enserré, du moins sur une partie de la longueur, par concordance de forme, par la roue de transmission (11) et formant sur cette partie de la longueur, un cône tronqué sur sa face extérieure, et ce avec un diamètre qui diminue en direction de la première extrémité (5.1.1) d'arbre d'essuyage.

2. Commande d'essuie-glace à moteur électrique selon la revendication 1, **caractérisée en ce que** le carter (4) présente, sur son deuxième côté opposé au premier, une ouverture (9.1) qui est fermée par un élément de fermeture (14, 14a, 18) pouvant s'éloigner et/ou sortir de l'arbre d'essuyage (5) lors du mouvement de déport axial de celui-ci, l'élément de fermeture (14, 14a, 18) étant maintenu par blocage dans l'ouverture (9.1).

3. Commande d'essuie-glace à moteur électrique selon la revendication 2, **caractérisée en ce que** l'élément de fermeture (14a) présente au moins un canal d'aération (15), de préférence avec une membrane (16).

4. Commande d'essuie-glace à moteur électrique selon la revendication 2 ou la revendication 3, **caractérisée en ce que** l'élément de liaison en forme de manchon (19) forme, avec une partie de la longueur (19.2), un élément d'appui, qui coopère avec la face interne de l'ouverture (9.1), pour l'arbre d'essuyage (5).

5. Commande d'essuie-glace à moteur électrique selon l'une quelconque des revendications 2 à 4, **caractérisée en ce que** l'élément de liaison en forme de manchon (13, 19) se trouve sur l'arbre d'essuyage (5) sans pouvoir tourner, de préférence sur au moins un tronçon profilé (5.2.2) de l'arbre d'essuyage (5) et/ou sur au moins un tronçon de l'arbre d'essuyage (5) qui présente une section autre que circulaire.

6. Commande d'essuie-glace à moteur électrique selon l'une quelconque des revendications précédentes, **caractérisée en ce que** l'élément de liaison en forme de manchon (13, 19) ne peut pas se déplacer axialement sur l'arbre d'essuyage (5).

7. Commande d'essuie-glace à moteur électrique selon l'une quelconque des revendications précédentes, **caractérisée en ce que** l'arbre d'essuyage (5) et la roue de transmission (11) peuvent être séparés au niveau de l'élément de liaison (13, 18) pour le mouvement de déport axial.

8. Commande d'essuie-glace à moteur électrique selon la revendication 7, **caractérisée en ce que** la séparation, pour le mouvement de déport axial, intervient entre l'élément de liaison (13, 19) restant sur l'arbre d'essuyage (5) et la roue de transmission (11).

9. Commande d'essuie-glace à moteur électrique selon l'une quelconque des revendications précédentes, **caractérisée en ce que**, lors du mouvement de déport axial, le coussinet (10) est entraîné sur la deuxième extrémité (5.2.1) d'arbre d'essuyage et/ou l'élément de liaison en forme de manchon (13, 19) avec l'arbre d'essuyage (5) en sortant de préférence du carter (4).

10. Commande d'essuie-glace à moteur électrique selon l'une quelconque des revendications précédentes, **caractérisée en ce que** l'élément de liaison en forme de manchon (13, 19) est constitué d'une matière métallique ou d'une matière synthétique.

11. Commande d'essuie-glace à moteur électrique selon l'une quelconque des revendications précédentes, **caractérisée en ce que** l'élément de liaison en forme de manchon (13) est maintenu par pression sur l'arbre d'essuyage (5).

12. Commande d'essuie-glace à moteur électrique selon l'une quelconque des revendications précédentes, **caractérisée en ce que** l'élément de liaison en forme de manchon (13, 19) est produit par gainage de l'arbre d'essuyage (5).

13. Commande d'essuie-glace à moteur électrique selon l'une quelconque des revendications précédentes, **caractérisée en ce que** la roue de transmission (11) est produite par gainage de l'élément de liaison (13).

14. Commande d'essuie-glace à moteur électrique selon l'une quelconque des revendications précédentes, **caractérisée en ce que** l'élément de liaison en forme de manchon (19) est produit par moulage par injection de matière plastique lorsqu'on utilise l'arbre d'essuyage placé dans un moule et la roue de transmission (11) préfabriquée, placée dans le moule.

15. Commande d'essuie-glace à moteur électrique selon l'une quelconque des revendications précédentes, **caractérisée en ce que** l'élément de liaison (19) enserre l'arbre d'essuyage (5) à l'avant sur la deuxième extrémité (5.2.1) de celui-ci.

16. Commande d'essuie-glace à moteur électrique selon l'une quelconque des revendications précédentes, **caractérisée en ce que** la force de déclenchement est ajustée du moins en partie par le cône ou l'angle de cône de la faxe extérieure tronconique de l'élément de liaison en forme de manchon (13, 19).

17. Commande d'essuie-glace à moteur électrique selon l'une quelconque des revendications précédentes, **caractérisée en ce que** le carter (4) est le carter de transmission du moteur d'essuyage.
